# EUROPEAN PATENT APPLICATION

(11) **EP 2 192 813 A1**
(43) Date of publication of application: **02.06.2010**
(21) Application number: 09177284.8
(22) Date of filing: 27.11.2009
(51) Int. Cl.: H04W 72/04

(54) **Method and apparatus for releasing reserved resources**

(30) Priority: 28.11.2008 CN 200810217789
(71) Applicant: Huawei Technologies Co., Ltd., Longgang District, Shenzhen Guangdong 518129 (CN)
(72) Inventor: Wen, Xue, 518129, Shenzhen (CN)
(74) Representative: Charles, Glyndwr

(57) **Abstract**

The present invention relates to radio telecommunication, and discloses a method for releasing reserved resources. The method includes: utilizing the control signaling or control signaling format 1A with minimum overhead in the downlink scheduling control signalings supported by the user in a Long Term Evolution (LTE) system as the control signaling for releasing reserved resources. An apparatus and a base station for releasing reserved resources are disclosed in an embodiment of the present invention. Through the method, the apparatus, and the base station for releasing reserved resources disclosed herein, the Physical Downlink Control Channel (PDCCH) resources are saved, and transmission performance of the control signaling for releasing reserved resources is improved.

## Description

### FIELD OF THE INVENTION

The present invention relates to radio telecommunication field, and in particular, to a method and an apparatus for releasing reserved resources in a radio telecommunication system.

### BACKGROUND

Long Term Evolution (LTE) is a technical plan developed by the 3rd Generation Partnership Project (3GPP) standardization organization based on the Universal Mobile Telecommunications System (UMTS). The LTE will bring faster and smoother radio telecommunication networks for mobile users. Currently, the LTE standardization is centralized on the physical layer, the air interface protocol, and the network architecture.

In the LTE system, Physical Downlink Control Channel (PDCCH) is one of the physical layer channels, which is configured to transmit the downlink control signaling of the physical layer. The control signaling may include the control messages of physical resource allocation and modulation mode, which are required for data transmission.

In an LTE system, the physical layer resources are scheduled in two ways: dynamic scheduling, and persistent scheduling. In the persistent scheduling, resources are reserved by the system, and keep unchanged in the process of sending or receiving data. In dynamic scheduling, resources are allocated by the system dynamically, and vary with time dynamically in the process of sending or receiving data.

Another resource scheduling mode defined in the LTE system is semi-persistent scheduling. In the semi-persistent scheduling, the resources are scheduled persistently for initial transmission of the data; and, if the initial transmission is erroneous, Hybrid Automatic Repeat Request (HARQ) retransmission is started, and the resources are scheduled dynamically in the retransmission. After receiving a control signaling, sent by the base station, which indicates the semi-persistent scheduling is activated, the user believes that the corresponding time-frequency resources are reserved for initial transmission at the time of sending the control message and the control message indication. The user may send data (uplink) or receive data (downlink) on the reserved resources.

However, in the prior art, no specified solution to releasing downlink reserved resources is provided. Specified solutions to releasing downlink reserved resources are urgently needed.

### SUMMARY

A method and an apparatus for releasing reserved resources are disclosed in embodiments of the present invention to release downlink reserved resources.

In an implementation form of the present invention, a method for releasing reserved resources is provided. The method includes: determining a control signaling with minimum overhead in the downlink scheduling control signalings supported by a user or a control signaling format 1A to be the control signaling for releasing downlink reserved resources; and utilizing the control signaling with minimum overhead or control signaling format 1A to release the downlink reserved resources.

According to the other aspect of the present invention, an apparatus for releasing reserved resources is provided. The apparatus includes: a signaling determining unit, configured to determine a control signaling with minimum overhead in the downlink scheduling control signalings supported by a user or a control signaling format 1A to be the control signaling for releasing downlink reserved resources; and a resource releasing unit, configured to utilize the control signaling with minimum overhead or control signaling format 1A determined by the signaling determining unit to release the downlink reserved resources.

Compared with the prior art, in the method and the apparatus for releasing reserved resources disclosed herein, when selecting the control signaling with minimum overhead to release the downlink reserved resources, the resources of the control channel can be saved and the transmission performance of the control signaling can be improved; when selecting the control signaling format 1A, the resources of the control channel, the transmission performance of the control signaling can be improved and the system design can be simplified.

### BRIEF DESCRIPTION OF THE DRAWINGS

FIG. 1 is a flowchart illustrating a method for releasing reserved resources according to an embodiment of the present invention;
FIG. 2 is another flowchart illustrating a method for releasing reserved resources according to an embodiment of the present invention;
FIG. 3 is another flowchart illustrating a method for releasing reserved resources according to an embodiment of the present invention; and
FIG. 4 shows a simplified structure of an apparatus for releasing reserved resources according to an embodiment of the present invention.

### DETAILED DESCRIPTION

The embodiments of the present invention are detailed below by reference to accompanying drawings.

The embodiments of the present invention relate to a technology of releasing downlink reserved resources, which uses a control signaling with minimum overhead among the downlink scheduling control signalings supported by the user or the control signaling format 1A as the control signaling for releasing the downlink reserved resources, with a view to saving and making full use of the limited PDCCH resources, and improving the transmission performance of the control signaling for releasing reserved resources.

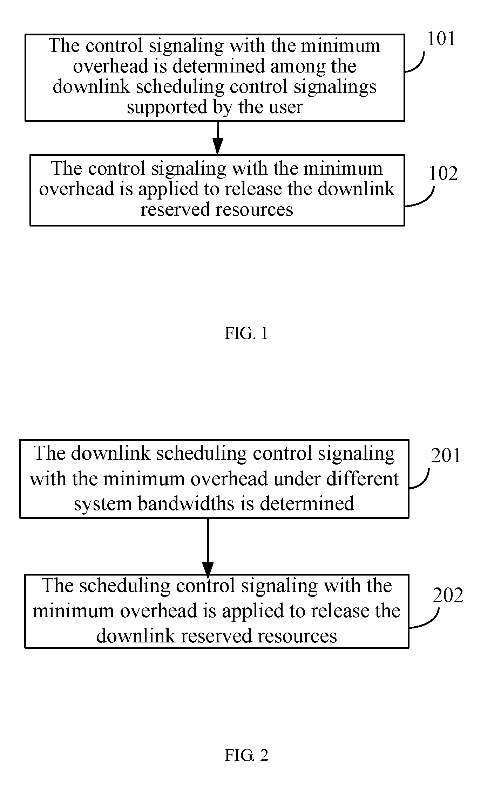

FIG. 1 shows a flowchart of a method for releasing reserved resources according to an embodiment of the present invention. As shown in FIG. 1, the method includes the following steps:
Step 101: The control signaling with minimum overhead is determined among the downlink scheduling control signalings supported by a user.

Taking the downlink control signaling of semi-persistent scheduling in the LTE system as an example, it is assumed that two downlink control signalings (format 1 and format 1A) are applicable to scheduling of the downlink physical resources. It is assumed that under a bandwidth, the overhead of format 1 is M bits, and the overhead of format 1A is N bits. If M > N, the format 1A with the overhead of N bits is selected as the control signaling for releasing reserved resources, no matter whether the semi-persistent scheduling is activated through format 1 or format 1A. If M < N, the format 1 with the overhead of M bits is selected as the control signaling for releasing reserved resources, no matter whether the semi-persistent scheduling is activated through format 1 or format 1A.

Format 1 and format 1A aforementioned are for the exemplary purpose only. In the LTE system, downlink control signaling of other formats such as format 2 and format 2A may be used for releasing downlink reserved resources. In this case, the foregoing mode is applicable in determining the control signaling for releasing downlink reserved resources as well.
Step 102: The determined control signaling with minimum overhead is applied to release the downlink reserved resources.

The control signaling with minimum overhead among the scheduling control signalings supported by the user is applied to release the downlink reserved resources, thus saving the limited PDCCH resources and improving the transmission performance of the control signaling.

The control signaling (for example, format 1 or format 1A) for releasing reserved resources may use a state of the control signaling to indicate release of the reserved resources. For example, if format 1A is determined as the control signaling for releasing reserved resources, one of the formats shown in Table 1 may be applied.

**Table 1**

| | |
|---|---|
| Format 0/format 1A flag bit field | 1 |
| Distributed/centralized resource allocation flag bit field | 0 |
| Resource allocation field | All 1s |
| Modulation coding field | All 0s |
| Hybrid automatic retransmission process number field | All 0s |
| New data indication field | 0 |
| Redundant version field | 0 |
| Power control field | Any state |
| Downlink subfield (existent only under TDD) | Any state |

The control signaling for releasing reserved resources may perform scheduling for a single user. Therefore, in order to release reserved resources for a single user, the control signaling with minimum overhead among the UE-specific control signalings supported by the user may be selected as the control signaling for releasing reserved resources.

The foregoing method may also be applicable to release the reserved resources of persistent scheduling.

FIG. 2 shows a flowchart of a method for releasing reserved resources in a radio telecommunication system according to an embodiment of the present invention. As shown in FIG. 2, the method includes the following steps:
Step 201: The downlink scheduling control signaling with minimum overhead under different system bandwidths is determined as the control signaling for releasing downlink reserved resources.

Generally, in the control signaling, the overhead of the control information and the overhead of the Cyclic Redundancy Check (CRC) constitute the overhead of the whole control signaling. The overhead (or bits) of the CRC are 16 bits regularly. Therefore, the overhead of the control signaling depends on the overhead of the control information in the control signaling.

The overhead of the control signaling for scheduling is related to the system bandwidth. Therefore, the overhead of the control signaling under different bandwidths in the LTE system may be obtained according to the overhead (or bits) of the control information in the control signaling.

Supposing that the control signalings used in the semi-persistent scheduling include format 1 and format 1A, it is practicable to calculate the overhead of format 1 and format 1A under different bandwidths according to the overhead of the control information of format 1 and format 1A. Table 2 shows the overhead (inclusive of 16-bit CRC overhead) of format 1 and format 1A under different bandwidths. The system bandwidth is denoted by the quantity of physical resource blocks. A total of 6-110 physical resource blocks are supported in an LTE system.

**Table 2**

| **System bandwidth** | **Overhead of format 1A** | **Overhead of format 1** |
|---|---|---|
| 6 | 37 | 35 |
| 7 | 37 | 38 |
| 8 | 37 | 38 |
| 9 | 37 | 38 |
| 10 | 37 | 39 |
| 11 | 38 | 36 |
| 12 | 38 | 36 |
| 13 | 38 | 37 |
| 14 | 38 | 37 |
| 15 | 38 | 39 |
| 16 | 39 | 38 |
| 17 | 39 | 41 |
| 18 | 39 | 41 |
| 19 | 39 | 41 |
| 20 | 39 | 41 |
| 21 | 39 | 41 |
| 22 | 39 | 41 |
| 23 | 41 | 43 |
| 24 | 41 | 43 |
| 25 | 41 | 43 |
| 26 | 41 | 43 |
| 27 | 41 | 39 |
| 28 | 41 | 43 |
| 29 | 41 | 43 |
| 30 | 41 | 43 |
| 31 | 41 | 43 |
| 32 | 41 | 43 |
| 33 | 41 | 43 |
| 34 | 41 | 43 |
| 35 | 41 | 43 |
| 36 | 41 | 43 |
| 37 | 41 | 43 |
| 38 | 41 | 43 |
| 39 | 41 | 43 |
| 40 | 41 | 44 |
| 41 | 41 | 44 |
| 42 | 41 | 44 |
| 43 | 41 | 45 |
| 44 | 41 | 45 |
| 45 | 43 | 45 |
| 46 | 43 | 46 |
| 47 | 43 | 46 |
| 48 | 43 | 46 |
| 49 | 43 | 47 |
| 50 | 43 | 47 |
| 51 | 43 | 47 |
| 52 | 43 | 49 |
| 53 | 43 | 49 |
| 54 | 43 | 49 |
| 55 | 43 | 49 |
| 56 | 43 | 49 |
| 57 | 43 | 49 |
| 58 | 43 | 50 |
| 59 | 43 | 50 |
| 60 | 43 | 50 |
| 61 | 43 | 51 |
| 62 | 43 | 51 |
| 63 | 43 | 51 |
| 64 | 43 | 46 |
| 65 | 43 | 47 |
| 66 | 43 | 47 |
| 67 | 43 | 47 |
| 68 | 43 | 47 |
| 69 | 43 | 49 |
| 70 | 43 | 49 |
| 71 | 43 | 49 |
| 72 | 43 | 49 |
| 73 | 43 | 49 |
| 74 | 43 | 49 |
| 75 | 43 | 49 |
| 76 | 43 | 49 |
| 77 | 43 | 50 |
| 78 | 43 | 50 |
| 79 | 43 | 50 |
| 80 | 43 | 50 |
| 81 | 43 | 51 |
| 82 | 43 | 51 |
| 83 | 43 | 51 |
| 84 | 43 | 51 |
| 85 | 43 | 52 |
| 86 | 43 | 52 |
| 87 | 43 | 52 |
| 88 | 43 | 52 |
| 89 | 43 | 53 |
| 90 | 43 | 53 |
| 91 | 44 | 53 |
| 92 | 44 | 53 |
| 93 | 44 | 54 |
| 94 | 44 | 54 |
| 95 | 44 | 54 |
| 96 | 44 | 54 |
| 97 | 44 | 55 |
| 98 | 44 | 55 |
| 99 | 44 | 55 |
| 100 | 44 | 55 |
| 101 | 44 | 57 |
| 102 | 44 | 57 |
| 103 | 44 | 57 |
| 104 | 44 | 57 |
| 105 | 44 | 57 |
| 106 | 44 | 57 |
| 107 | 44 | 57 |
| 108 | 44 | 57 |
| 109 | 44 | 58 |
| 110 | 44 | 58 |

Therefore, format 1A may be used as a signaling for releasing reserved resources under those system bandwidths where the overhead of format 1 is greater than the overhead of format 1A; and format 1 may be used as a signaling for releasing reserved resources under those system bandwidths where the overhead of format 1 is less than the overhead of format 1A.

Step 202: The determined control signaling with minimum overhead is applied to release the reserved resources.

In this embodiment, format 1A may be used as a signaling for releasing reserved resources under those system bandwidths where the overhead of format 1 is greater than the overhead of format 1A; and format 1 may be used as a signaling for releasing reserved resources under those system bandwidths where the overhead of format 1 is less than the overhead of format 1A. In this way, the resources of the control channel are saved, and the transmission performance of the control signaling is improved.

In the LTE system, downlink control signaling of other formats such as format 2 and format 2A may be used for releasing downlink reserved resources. Therefore, no matter how many formats of control signaling exist in the LTE system for releasing downlink reserved resources, the foregoing method may be applied to determine the control signaling for releasing downlink reserved resources.

The control signaling for releasing reserved resources may perform scheduling for a single user. Therefore, in order to release reserved resources for a single user, the control signaling with minimum overhead among the UE-specific control signalings supported by the user may be selected as the control signaling for releasing reserved resources.

The foregoing method may also be applicable to release the reserved resources of persistent scheduling.

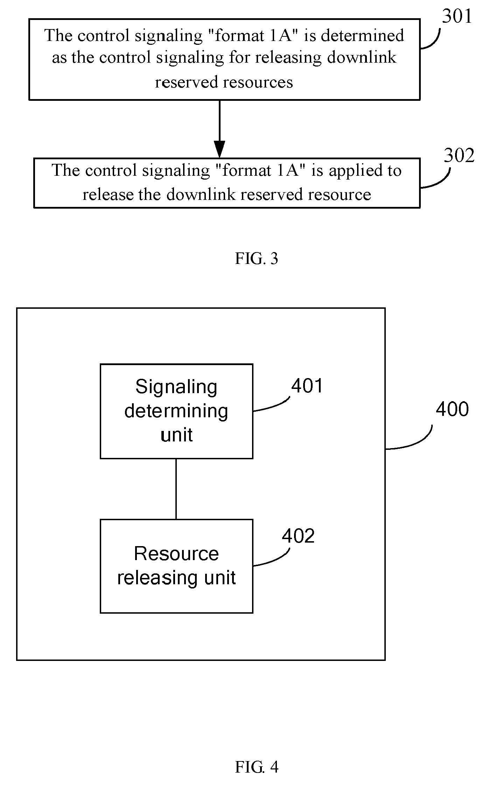

FIG. 3 shows another flowchart of a method for releasing reserved resources in a radio telecommunication system according to an embodiment of the present invention. As shown in FIG. 3, the method includes the following steps:
Step 301: The control signaling "format 1A" is determined as the control signaling for releasing downlink reserved resources.

Table 2 shows that in most circumstances, the overhead of format 1A is less than that of format 1. Especially, among the symbolic bandwidths defined in the LTE system: in 1.4 MHz (6 physical resource blocks), 3 MHz (15 physical resource blocks), 5 MHz (25 physical resource blocks), 10 MHz (50 physical resource blocks) and 20 MHz (100 physical resource blocks), the overhead of format 1A is less than that of format 1 except in the 1.4 MHz. In this embodiment, therefore, it is appropriate that format 1A is always used as the signaling for releasing reserved resources under any bandwidth of the LTE system no matter whether the reserved resource of semi-persistent scheduling is activated by format 1 or by format 1A.
Step 302: The control signaling "format 1A" is applied to release the downlink reserved resource.

Table 2 reveals that in most circumstances of system bandwidth, the overhead of format 1A is less than that of format 1. Therefore, format 1A is always used to release downlink reserved resources under any system bandwidth, thus saving the resources of the control channel, improving the transmission performance of the control signaling, and simplifying the system design.

The control signaling for releasing reserved resources may perform scheduling for a single user. Therefore, format 1A among the UE-specific downlink scheduling control signalings may be determined as the control signaling for releasing downlink reserved resources.

The foregoing method is applicable to release of the reserved resources of persistent scheduling as well.

In the LTE system, various control signalings are carried on the physical control channel for sending. Before mapping to the actual physical resource, the logical physical channel uses a Control Channel Element (CCE) as a unit. CCEs 0-15 are a public search area. A control signaling of group scheduling may be placed on the public search area, or a control signaling of UE-specific scheduling may be placed on the public search area. All users need to detect this public search area. The start point of a user search area ranges from CCEs 0-(M-1), which is calculated out according to a user identifier. M is the total number of the CCEs.

Format 1A exists in both the public search area and the user search area, but format 1, format 2, and format 2A exist only in the user search area, and format 1C exist only in the public search area. Therefore, control signaling "format 1A" may be placed on more CCEs. Considering this character of format 1A, format 1A may still be used as the control signaling for releasing downlink reserved resources even if the overhead of format 1A is not minimum in certain circumstances. In this way, it is more probable for users to detect their own resource release signaling, and the efficiency and the performance of resource scheduling are improved.

FIG. 4 shows a simplified structure of an apparatus (400) for releasing reserved resources according to an embodiment of the present invention. The apparatus (400) for releasing reserved resources may be applied in an LTE system for releasing reserved resources. As shown in FIG. 4, the apparatus (400) for releasing reserved resources includes a signaling determining unit (401) and a resource releasing unit (402).

The signaling determining unit (401) is configured to determine the control signaling with minimum overhead in the downlink scheduling control signalings supported by the user or control signaling format 1A to be the control signaling for releasing downlink reserved resources.

The resource releasing unit (402) is configured to utilize the control signaling with minimum overhead or control signaling format 1A determined by the signaling determining unit (401) to release the downlink reserved resources.

Because the overhead of the downlink scheduling control signaling supported by the user varies with the system bandwidth, the control signaling with minimum overhead determined by the signaling determining unit (401) also varies.

The signaling determining unit (401) may be further configured to determine the control signaling with minimum overhead in the UE-specific control signalings supported by the user to be the control signaling for releasing downlink reserved resources when releasing downlink reserved resources for a single user; or determine UE-specific control signaling format 1A to be the control signaling for releasing downlink reserved resources.

In the LTE system, considering that the overhead of format 1A is less than the overhead of the control signalings such as format 1, format 2, and format 2A under most system bandwidths, or considering that format 1A exists in both the public search area and the user search area, the signaling determining unit (401) may determine format 1A under any system bandwidth to be the signaling for releasing downlink reserved resources so that the resource releasing unit (402) uses format 1A to release the downlink reserved resources. In this way, the system design is simplified, or it is more probable for users to detect their own resource release signaling, and the efficiency and the performance of resource scheduling are improved. It is understandable to those skilled in the art that all the units of the apparatus (400) for releasing reserved resources herein may be combined into one unit, or subdivided into more units. The apparatus (400) for releasing reserved resources may be a logical unit or physical unit of a base station (such as an eNode B) in the LTE system.

It is understandable to those skilled in the art that all or part of the methods in the foregoing embodiments may be implemented by hardware instructed by a program. The program may be stored in a readable storage medium. Upon being executed, the program performs all or part of the steps in the foregoing methods. The storage medium may be a ROM/RAM, magnetic disk, compact disk, and so on.

Although the invention has been described through several preferred embodiments, the invention is not limited to such embodiments. It is apparent that those skilled in the art can make modifications and variations to the invention without departing from the scope of the invention. The invention is intended to cover the modifications and variations provided that they fall in the scope of protection defined by the claims or their equivalents.

## Claims

1. A method for releasing reserved resources, comprising:
determining a control signaling format 1A to be the control signaling for releasing downlink reserved resources; and
utilizing the control signaling format 1A to release the downlink reserved resources.

2. The method of claim 1, wherein the determining the control signaling format 1A to be the control signaling for releasing downlink reserved resources comprises:
determining the control signaling format 1A to be the control signaling for releasing downlink reserved resources in any bandwidth of the Long Term Evolution, LTE, system.

3. The method of claim 1, wherein the determining the control signaling format 1A to be the control signaling for releasing downlink reserved resources comprises:
determining a UE-specific control signaling format 1A to be the control signaling for releasing downlink reserved resources when releasing reserved resources for a single user.

4. The method of any one of claims 1 to3, wherein the utilizing the control signaling format 1A to release the downlink reserved resources comprises:
utilizing the control signaling format 1A to release the downlink reserved resources of semi-persistent scheduling or persistent scheduling.

5. The method of any one of claims 1 to 4, wherein the utilizing the control signaling format 1A to release the downlink reserved resources comprises:
transmitting the control signaling format 1A to a User Equipment; wherein a state of the control signaling format 1A is configured to indicate release of the reserved resources.

6. An apparatus for releasing reserved resources, comprising a signaling determining unit and a resource releasing unit, wherein
the signaling determining unit is configured to determine a control signaling format 1A to be the control signaling for releasing downlink reserved resources; and
the resource releasing unit is configured to utilize the control signaling format 1A determined by the signaling determining unit to release the downlink reserved resources.

7. The apparatus of claim 6, wherein
the signaling determining unit is further configured to determine the control signaling format 1A to be the control signaling for releasing downlink reserved resources in any bandwidth of the LTE system.

8. The apparatus of claim 6, wherein
the resource releasing unit is further configured to utilize the control signaling format 1A to release the downlink reserved resources of semi-persistent scheduling or persistent scheduling.

9. The apparatus of claim 6, wherein
the signaling determining unit is further configured to determine a UE-specific control signaling format 1A to be the control signaling for releasing downlink reserved resources when releasing reserved resources for a single user.

10. The apparatus of claim 6, wherein
the signaling determining unit is further configured to transmit the control signaling format 1A to a User Equipment; wherein a state of the control signaling format 1A is configured to indicate release of the reserved resources.

11. A method for releasing reserved resources, comprising:
determining a control signaling with minimum overhead in downlink scheduling control signalings supported by a user to be the control signaling for releasing downlink reserved resources; and
utilizing the control signaling with minimum overhead to release the downlink reserved resources.

12. The method of claim 11, wherein the determining the control signaling with minimum overhead in downlink scheduling control signalings supported by the user to be the control signaling for releasing downlink reserved resources comprises:
determining the control signaling with minimum overhead in the downlink scheduling control signalings supported by the user according to bandwidths of the LTE system.

13. The method of claim 11, wherein the determining the control signaling with minimum overhead in downlink scheduling control signalings supported by the user to be the control signaling for releasing downlink reserved resources comprises:
determining a control signaling with minimum overhead in UE-specific downlink scheduling control signalings supported by the user to be the control signaling for releasing downlink reserved resources when releasing reserved resources for a single user.

14. The method of any one of claims 11 to 13, wherein the utilizing the control signaling with minimum overhead to release the downlink reserved resources comprises:
utilizing the control signaling with minimum overhead to release the downlink reserved resources of semi-persistent scheduling or persistent scheduling.

15. The method of claim any one of claims 11 to 14, wherein the utilizing the control signaling with minimum overhead to release the downlink reserved resources comprises:
transmitting the control signaling with minimum overhead to a User Equipment; wherein a state of the control signaling with minimum overhead is configured to indicate release of the reserved resources.
